# EUROPEAN PATENT APPLICATION

(11) **EP 1 602 272 A1**
(43) Date of publication of application: **07.12.2005**
(21) Application number: 04253362.0
(22) Date of filing: 04.06.2004
(51) Int. Cl.: A01G 13/02, D04H 3/05, D04H 13/00

(54) **Reinforced sheet and method of manufacture**

(71) Applicant: Gromax International Ltd, Great Bricett, Ipswich IP7 7DS (GB)
(72) Inventor: Crame, Nicholas John, Garden House, Church Road, Stowmarket, IP14 2HF (GB)
(74) Representative: Simons, Alison

(57) **Abstract**

The present invention relates to a reinforced sheet (1) comprising a base sheet (12) of non-woven material. The base sheet (12) has a first length (4) along a first axis (6), a first side (8) and a second side (10) which are substantially parallel with the first axis (6) and are located on opposing sides of the base sheet (12). The base sheet (12) further includes at least one line of reinforcement (2) which is formed integrally with the base sheet (12). The at least one line of reinforcement (2) comprises at least one reinforcing fibre (14) that extends for the first length (4) of the base sheet (12). The at least one reinforcing fibre (14) extends towards the first side (8) of the base sheet (12) for at least some of the first length (4) and towards the second side (10) for at least some of the first length (4). The tear resistance of the reinforced sheet (1) is increased against a tear extending across the line of reinforcement (2).

## Description

The present invention relates to a reinforced sheet and to a method of manufacturing such a reinforced sheet. The invention relates particularly to non-woven sheets which are especially suitable for use as crop covers intended for use to protect crop plants.

Sheets of non-woven material are used in many different applications and in many different industries. Non-woven material comprises directionally or randomly orientated fibres, bonded by friction, and/or cohesion and/or adhesion and as such the end properties of such a material can be varied greatly.

In many cases a non-woven material is selected by a user because it is cheap and easy to handle. However, if the non-woven material is damaged it is vulnerable to tears beginning at the point of damage where there are exposed edges. In some instances the tears may extend until they reach a seam and then the material may continue to tear along the join. Users may then complain that the fabric is not strong enough or that the seam was not correctly joined and demand a replacement.

Such complaints are increasing in number, particularly from crop growers who cover large areas of land with crop covers formed from non-woven material and are reducing the time spent checking for, and repairing, damage to crop covers. If a tear is repaired soon after it has formed, the damage can be limited as the sides of the tear are no longer exposed and vulnerable to further damage.

It is known to provide non-woven material with double thickness edges for ease of handling, laying and securing. It is also known to provide reinforced centre regions for enhanced tear resistance.

It is an object of the present invention to address some of the above issues.

According to the invention there is provided a reinforced sheet comprising a base sheet of non-woven material, the base sheet having a first length along a first axis, a first side and a second side substantially parallel with the first axis and located on opposing sides of the sheet, the base sheet further including at least one line of reinforcement, the at least one line of reinforcement being formed integrally with said base sheet and characterised in that the at least one line of reinforcement comprises at least one reinforcing fibre that extends for the first length of the base sheet, the at least one reinforcing fibre extending towards the first side of the sheet for at least some of the first length and towards the second side for at least some of the first length, the tear resistance of the reinforced sheet being increased against a tear extending across the line of reinforcement.

By providing such lines of reinforcement within the reinforced sheet any tears that occur are restricted in the directions in which they can spread. By incorporating a reinforcing thread in the non-woven base sheet to form the lines of reinforcement the overall weight of the reinforced sheet can be reduced. Incorporating the reinforcing fibre integrally within the base sheet reduces the likelihood that the reinforcing material could be removed through careless handling or other damage. The surface finish of the non-woven base sheet is also not affected in the same way as it would be if the reinforcing was achieved through the addition of double thickness regions. Ensuring that the reinforcing fibre extends towards the first side of the sheet for at least some of the first length and towards the second side for at least some of the first length helps to prevent a tear extending freely along the entire length of the reinforced sheet as the tear has an increased likelihood of meeting the line of reinforcement.

Other parts of the sheet may also be reinforced, for example the sides. These could be reinforced using the reinforcing fibres, or other reinforcing techniques such as by having double thickness edge portions.

It should be understood that such a reinforced sheet is particularly suitable for applications as a crop cover, but is also suitable for use in applications where a non-woven fabric having an increased tear resistance would be advantageous such as insulation in clothing, absorbent wipes or bed linen.

It is preferred that there are a plurality of lines of reinforcement, each comprising at least one reinforcing fibre, and preferably each line of reinforcement including only a single fibre.

The reinforcing fibres may be made from any suitable material and may be altered depending upon the material used to form the plurality of fibres. Any suitable cross section of fibre may also be used provided that the tear resistance of the reinforced sheet is increased across the line of reinforcement as required. It is, however, preferred that the reinforcing fibres are made from polypropylene.

The lines of reinforcement may create any pattern in the reinforced sheet, but it is preferred that each line of reinforcement periodically oscillates about a reinforcement axis substantially parallel with the first axis. This creates a defined line through which a tear is restricted from passing. Having such a periodic pattern is easier to manufacture and also means that the length of a tear in any part of the reinforced sheet can be more accurately predicted without the need to know the exact pattern of the line of reinforcement in that region.

Preferably there are a plurality of lines of reinforcement and each line of reinforcement periodically oscillates about a different reinforcement axis substantially parallel with the first axis.

Having a plurality of lines of reinforcement running in the reinforced sheet restricts the length of a tear that may form transverse to the first axis, but does not necessarily prevent a tear extending for the entire first length of the reinforced sheet. It is therefore preferred that at least two lines of reinforcement intersect in at least one location and it is especially preferred that regions of the reinforced sheet are substantially enclosed by two or more lines of reinforcement. If the lines of reinforcement intersect a tear is substantially prevented from propagating between the two lines of reinforcement and any tear is therefore better controlled. By enclosing regions of the reinforced sheet using intersecting lines of reinforcement, a tear within the enclosed region is substantially prevented from extending out of said region.

The invention also provides a method of manufacturing a reinforced sheet, the method comprising the steps of:
a) depositing a plurality of fibres to form a web having a first length along a first axis, a first side and a second side substantially parallel with the first axis and located on opposing sides of the sheet;
b) depositing at least one reinforcing fibre amongst said fibres, the at least one reinforcing fibre extending towards the first side of the web for at least some of the first length and towards the second side for at least some of the first length;
c) consolidating said web and said at least one reinforcing fibre to form a reinforced sheet, the plurality of fibres interacting to bond the web to form a non-woven base sheet, the at least one reinforcing fibre being bound into said base sheet to form a line of reinforcement such that the tear resistance of the reinforced sheet is increased against a tear extending across the line of reinforcement.

By forming a reinforced sheet in this way it is ensured that the reinforcing fibre is formed integrally with the base sheet and the resulting reinforced sheet is likely to be more robust.

It is preferred that the plurality of fibres are deposited onto a conveyer belt which is moved along the first axis so that a substantially continuous web can be formed. It is currently proposed that the reinforcing fibre is deposited from a comb having at least one outlet which is moved in a direction transverse to the first axis during the deposition of the plurality of fibres and reinforcing fibre. This means that the reinforcing fibre is deposited in the required pattern in amongst the plurality of fibres so that, when the sheet is consolidated, the reinforcing fibres are bound into the base sheet.

The plurality of fibres may be deposited by any method, for example the three most common non-woven manufacturing methods of spunlaying, drylaying and wetlaying. It is preferred that the plurality of fibres are spunlaid as the resulting web has some strength in the unconsolidated state due to the bonding of the plurality of fibres to one another.

There are preferably a plurality of reinforcing fibres deposited into the sheet. It is further preferred that there are a plurality of outlets, each outlet depositing at least one reinforcing fibre.

The reinforcing fibres may be deposited by any suitable method, for example extrusion or feeding from a spool. It is preferred that the reinforcing fibres are fed from a spool as this enables rapid dispensation of reinforcing fibre. It is preferred that the spools of reinforcing fibre are wound so that the end of a fibre of one spool can be joined to the start of a fibre on a further spool by, for example knotting, gluing or heat bonding so that a substantially continuous line of reinforcement can be formed.

There may be more than one comb and each comb may include one or more outlets. If there are at least two combs it is preferred that the two combs are moved such that at least one outlet from each comb crosses an axis substantially parallel with the first axis such that the reinforcing fibres deposited by each outlet cross one another. If each comb has at least two outlets, it is preferred that two outlets are arranged to deposit reinforcing fibres in the sheet such that the reinforcing fibres from said outlets are adjacent in a direction substantially perpendicular to the first axis. This enables a greater width of sheet to be reinforced without the need to move the combs such a great distance. The at least two combs may be moved such that the at least two outlets from each comb cross an axis substantially parallel with the first axis such that the reinforcing fibres deposited from the at least two outlets of a first comb cross the fibres deposited from the at least two outlets of a second comb. This enables regions of the reinforced sheet to be substantially enclosed by lines of reinforcement.

The reinforced fibres can be laid on, in or under the web as it is formed. It is currently preferred that the reinforcing fibres are laid on the conveyer belt and the plurality of fibres deposited onto the reinforcing fibres. When the web and reinforcing fibres are consolidated, the reinforcing fibres are bonded to the plurality of fibres in the non-woven base sheet.

The invention will now be further described, by way of example, with reference to the accompanying drawings, in which:
Figure 1 shows a reinforced sheet having a single line of reinforcement;
Figure 2 shows a reinforced sheet having two intersecting lines of reinforcement;
Figure 3 shows a reinforced sheet having four lines of reinforcement in a first pattern;
Figure 4 shows a reinforced sheet having four lines of reinforcement in a second pattern; and
Figure 5 shows a schematic apparatus suitable for manufacturing a reinforced sheet.

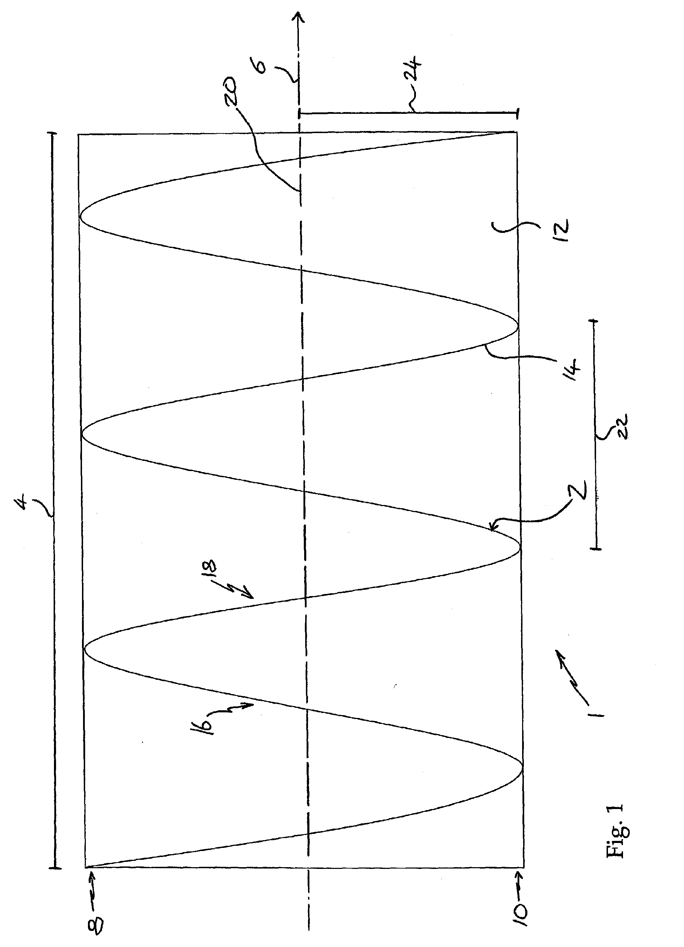

Figure 1 shows a reinforced sheet 1 having a line of reinforcement 2. The reinforced sheet 1 has a first length 4 along a first axis 6. The reinforced sheet 1 has a first side 8 and a second side 10 substantially parallel with the first axis 6 and located on opposing sides of the reinforced sheet 1.

The reinforced sheet 1 comprises a base sheet 12 within which a reinforcing fibre 14 is bound to form the line of reinforcement 2. The reinforcing fibre 14 extends continuously along the first length 4 and extends towards the first edge 8 for at least some of the first length 4 and towards the second edge 10 for at least some of the first length 4, for example in a first region 16 the line of reinforcement 2 extends towards the first edge 8 and in a second region 18 the line of reinforcement 2 extends towards the first edge 10. The direction in which the line of reinforcement extends 2 varies depending upon the direction in which the line is viewed as travelling. In this case the direction in which the line of reinforcement 2 extends is viewed from the point of view of travelling along the line in the direction of the first axis 6.

The line of reinforcement 2 oscillates about a reinforcement axis 20, which in this case coincides with the first axis 6. The oscillation has a period 22 and a magnitude 24. In this case the magnitude 24 is substantially half the width of the reinforce sheet 1.

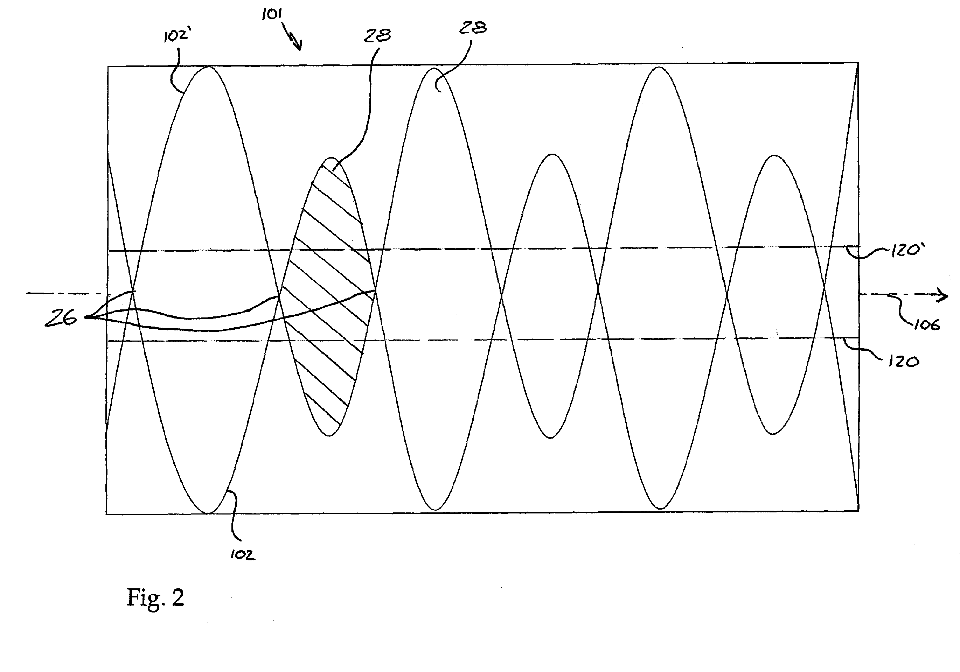

Figure 2 shows a reinforced sheet 101 which includes two lines of reinforcement 102 and 102'. The lines of reinforcement 102 and 102' oscillate about reinforcement axes 120,120' which are substantially parallel with the first axis 106.

The two lines of reinforcement both cross an axis substantially parallel with the first axis 106. In this case the axis that both line of reinforcement 102,102' cross coincides with the first axis 106. The oscillations of the line of reinforcement 102,102' are not in phase with one each other and therefore the two lines of reinforcement 102,102' intersect 26. The lines of reinforcement 102,102' substantially enclose regions 28 of the reinforced sheet 101. One such enclosed region 28 is shaded in this figure.

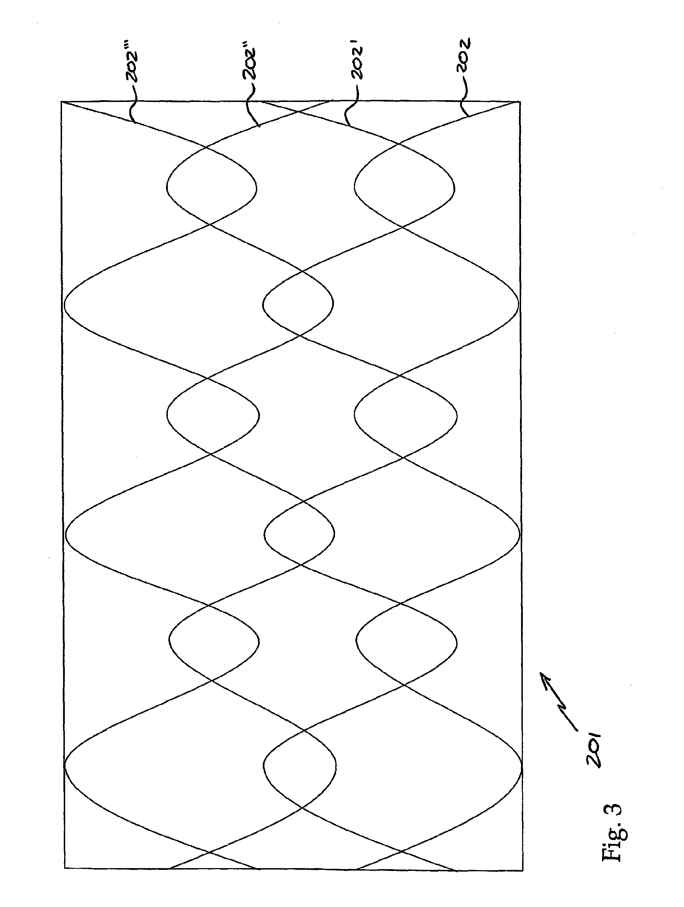

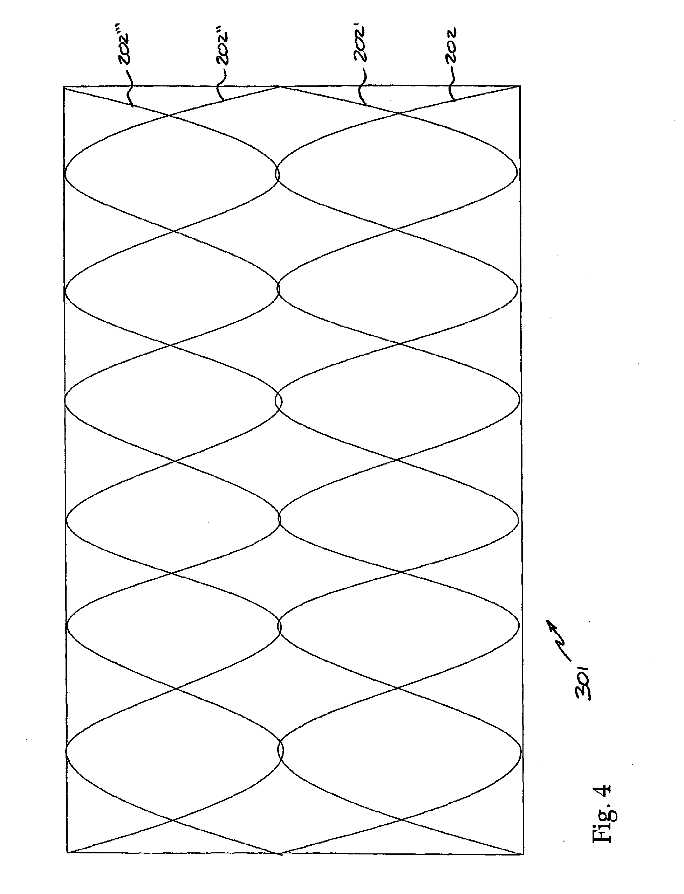

Figure 3 and 4 show different patterns of four lines of reinforcement 202, 202', 202", 202"' on reinforced sheets 201 and 301. In each pattern, regions of the reinforced sheet are substantially enclosed by lines of reinforcement. The different patterns are achieved by adjusting the positions of the reinforcement axis of the lines of reinforcement 202, 202', 202", 202'" and altering the magnitude of the oscillation such that the desired pattern is achieved.

It should be understood that the period of oscillation of each line of reinforcement need not be the same if more than one line of reinforcement is present. Different patterns of reinforcement can be achieved using combinations of different axes of reinforcement, different periods or magnitudes of oscillation and phase shifting the oscillations with respect to one another. It should also be understood that the period, magnitude and even the axis of oscillation for a specific line of reinforcement may vary along the first length 4 of the reinforced sheet 1, 101, 201, 301.

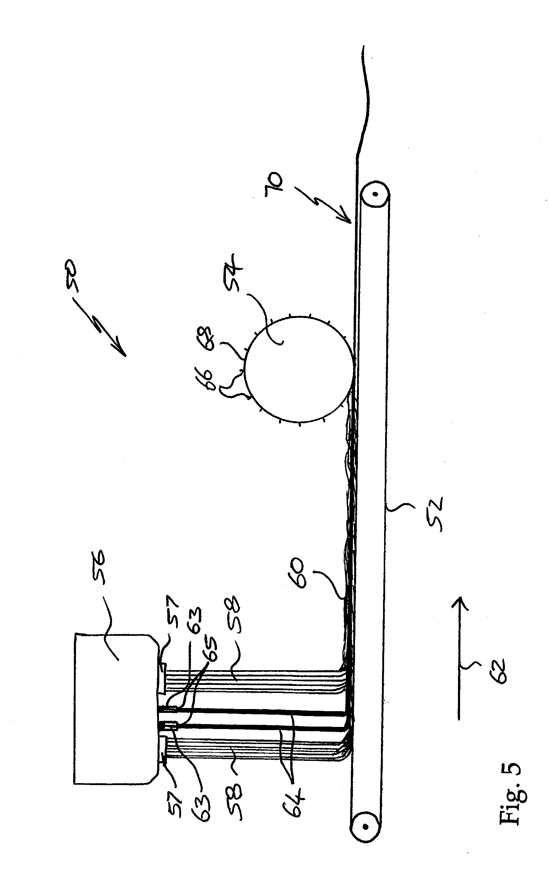

Figure 5 shows a schematic view of apparatus 50 suitable for manufacturing a reinforced sheet such as that shown in Figure 2. The apparatus 50 comprises a conveyor belt 52, a heated roller 54 and a fibre dispenser 56.

The fibre dispenser 56 includes spinning heads 57 which deposit a plurality of fibres 58 onto the conveyor belt 52 to form a web 60 having a first length along a first axis 62, a first side and a second side substantially parallel with the first axis 62 and located on opposing sides of the web.

The fibre dispenser 56 also includes combs 63 having outlets 65 which deposit at least one reinforcing fibre 64 amongst said fibres 58. The at least one reinforcing fibre 64 extends towards the first side of the web for at least some of the first length and towards the second side for at least some of the first length.

The conveyor belt 52 transports the web to the heated roller 54 which compresses the web 60 against the conveyor belt 52 to consolidate the web 60 and the reinforcing fibres 64 to form a reinforced sheet 70. The heated roller 54 may include projections 66 on an outer surface 68 to form a texture in a surface of the reinforced sheet 70.

During consolidation the plurality of fibres interact to bond the web 60 to form a non-woven base sheet. The reinforcing fibres are bound into the base sheet to form lines of reinforcement such that the tear resistance of the reinforced sheet is increased against a tear extending across the lines of reinforcement.

During the depositing of the plurality of fibres 58 the combs 63 move transverse to the first axis 62 so that the reinforcing fibres are deposited in the required pattern.

Although it is shown in this figure that the combs 63 are located between spinning heads 57 depositing the plurality of fibres, it should be understood that the combs 63 could be separate from the fibre dispenser and may be located before or after the spinning heads 57 in the direction of travel of the conveyor belt 52. In a preferred embodiment the combs 63 are located before the spinning heads 57.

It should be understood that the invention has been described above by way of example only and that modifications in detail may be made without departing from the scope of the invention as described in the claims.

## Claims

1. A reinforced sheet (1) comprising a base sheet (12) of non-woven material, the base sheet (12) having a first length (4) along a first axis (6), a first side (8) and a second side (10) substantially parallel with the first axis (6) and located on opposing sides of the base sheet (12), the base sheet (12) further including at least one line of reinforcement (2), the at least one line of reinforcement (2) being formed integrally with said base sheet (12) and
**characterised in that** the at least one line of reinforcement (2) comprises at least one reinforcing fibre (14) that extends for the first length (4) of the base sheet (12), the at least one reinforcing fibre (14) extending towards the first side (8) of the base sheet (12) for at least some of the first length (4) and towards the second side (10) for at least some of the first length (4), the tear resistance of the reinforced sheet (1) being increased against a tear extending across the line of reinforcement (2).

2. A reinforced sheet (1) as claimed in claim 1, in which the reinforced sheet (1) comprises a plurality of lines of reinforcement (102,102'), each line (102,102') comprising at least one reinforcing fibre (14) that extends for the first length (4) of the base sheet (12), each at least one reinforcing fibre (14) extending towards first side (8) of the sheet for at least some of the first length (4) and towards the second side (10) for at least some of the first length (4) and being reinforced such that tear resistance of the reinforced sheet is increased against a tear extending across each line of reinforcement (102,102').

3. A reinforced sheet (1) as claimed in claim 2, in which each line of reinforcement (102, 102') periodically oscillates about a reinforcement axis (20) substantially parallel with the first axis (6).

4. A reinforced sheet (1) as claimed in claim 3, in which there are a plurality of reinforcement axes (120,120'), and each line of reinforcement (102,102') periodically oscillates about a different reinforcement axis (120,120').

5. A reinforced sheet (1) as claimed in any preceding claim, in which the or each reinforcing fibre (14) is formed from polypropylene.

6. A reinforced sheet as claimed in any of claims 2 to 5, in which at least two lines of reinforcement (102, 102') intersect.

7. A reinforced sheet as claimed in claim 6, in which there are regions (28) of the reinforced sheet (1) substantially enclosed by lines of reinforcement (102,102').

8. A method of manufacturing a reinforced sheet (70), the method comprising the steps of:
a) depositing a plurality of fibres (58) to form a web (60) having a first length along a first axis (62), a first side and a second side substantially parallel with the first axis (62) and located on opposing sides of the web (60);
b) depositing at least one reinforcing fibre (64) amongst said fibres (58), the at least one reinforcing fibre (64) extending towards the first side of the web (60) for at least some of the first length and towards the second side for at least some of the first length;
c) consolidating said web (60) and said at least one reinforcing fibre (64) to form a reinforced sheet (70), the plurality of fibres (58) interacting to bond the web (60) to form a non-woven base sheet, the at least one reinforcing fibre (64) being bound into said base sheet to form a line of reinforcement such that the tear resistance of the reinforced sheet is increased against a tear extending across the line of reinforcement.

9. A method as claimed in claim 8, in which the plurality of fibres (58) are deposited onto a conveyer belt and the at least one reinforcing fibre (64) is deposited from a comb (63) having at least one outlet (65), the method further comprising the steps of using the conveyor belt (52) to move the web (60) along the first axis (52) and moving the comb (63) transverse to the first axis during the depositing of the fibres (58) and reinforcing fibre (64).

10. A method as claimed in claim 9, in which there are at least two reinforcing fibres (64) deposited into the web (60).

11. A method as claimed in claim 10, in which there are at least two combs (63), each comb (63) having at least one outlet (65) depositing a reinforcing fibre (64), each comb (63) being movable transverse to the first axis (62) during the depositing of the fibres (58) and reinforcing fibres (64).

12. A method as claimed in claim 11, in which the at least two combs (63) are moved such that at least one outlet (65) from each comb (63) crosses an axis substantially parallel with the first axis such that the reinforcing fibres (64) deposited by each outlet (65) cross one another.

13. A method as claimed in claim 12, in which each comb (63) comprises at least two outlets (65) arranged to deposit reinforcing fibres (64) in the web (60) such that the reinforcing fibres (64) from said outlets are adjacent in a direction substantially perpendicular to the first axis (62) and the at least two combs (63) are moved such that the at least two outlets (65) from each comb (63) cross an axis substantially parallel with the first axis (62) such that the reinforcing fibres (64) deposited from the at least two outlets (65) of a first comb (63) cross the fibres deposited from the at least two outlets (65) of a second comb (63).
